# EUROPEAN PATENT APPLICATION

(11) **EP 3 438 216 A1**
(43) Date of publication of application: **06.02.2019**
(21) Application number: 17774694.8
(22) Date of filing: 23.03.2017
(51) Int. Cl.: C09D 127/06, B29C 41/20, B32B 27/30, C08J 7/04, C09D 7/12

(54) **SPRAY COATING SOL, VINYL CHLORIDE RESIN MOLDED BODY WITH SPRAY COATING LAYER, MANUFACTURING METHOD FOR SAID MOLDED BODY, AND LAMINATE**

(30) Priority: 30.03.2016 JP 2016068205
(71) Applicant: Zeon Corporation, Tokyo 100-8246 (JP)
(72) Inventor: IWABUCHI Satoshi, Tokyo 100-8246 (JP)
(74) Representative: Maiwald Patent- und Rechtsanwaltsgesellschaft mbH
(86) International application number: PCT/JP2017/011807
(87) International publication number: WO 2017/170156

(57) **Abstract**

Provided is a spray coating sol having adequate fluidity and excellent thermal stability. The spray coating sol of the disclosure for forming a spray coating layer of an automobile interior material contains vinyl chloride-based fine particles, a plasticizer, and a solvent and has a viscosity of 500 mPa-s or more and 50000 mPa·s or less.

## Description

### TECHNICAL FIELD

The present disclosure relates to a spray coating sol, a vinyl chloride resin molded product having a spray coating layer and a method for manufacturing the same, and a laminate that can be used in manufacturing of automobile interior materials.

### BACKGROUND

In recent years, two-color molded products each having a desired colored thin film on the surface have been proposed as molded products serving as automobile interior materials that can be used in manufacturing of automobile interior parts having high design quality, such as automobile instrument panels and door trims. The thin film constituting the surface portion of such a two-color molded product and the composition for forming the thin film are required to have various performances.

Here, in the manufacturing of an automobile interior material constituting an automobile interior part, such as an automobile instrument panel, for example, a powder slush molding method, which can form a molded product by powdering a resin powder over a heated mold and melting the resin powder to reproduce the shape and surface pattern of the mold, has been widely employed. For example, in PTL 1, prior to the heating of a mold to be used in such a powder slush molding method, a composition containing a vinyl chloride-based resin is sprayed onto the mold to previously form a coating layer. In addition, in PTL 1, a sheet material serving as a substrate is formed on the mold provided with the coating layer by powder slush molding to manufacture a two-color-molded sheet material. As a result, in the two-color-molded sheet material of PTL 1, a thin and uniform coating layer having a thickness of 30 µm or less is formed on a sheet material with good close adherence.

More specifically, in the technology described in PTL 1, as a spray composition for forming a coating layer, 5 parts by weight of a plasticizer, 10 parts by weight of a curing agent, and 2 to 4 parts by weight of a heat stabilizer are used based on 100 parts by weight of an N-maleimide graft polymerized vinyl chloride resin. In addition, in the technology described in PTL 1, an epoxy resin is used as the powder slush molding composition for forming the sheet material.

### CITATION LIST

### Patent Literature

PTL 1: JP4912507B

### SUMMARY

### (Technical Problem)

Here, for example, in the manufacturing of a two-color molded product using the powder slush molding method, generally, the temperature of the mold to be used is increased to 200°C or more, and a resin powder constituting a substrate is then processed. Accordingly, a spray composition to be previously applied to the mold is required to have excellent thermal stability not causing coloring and so on even when the composition is exposed to high temperature in a later step. In addition, the spray composition is required to have good fluidity so that it can be precisely sprayed even in, for example, precise texture applied to the mold without causing dripping.

However, in the conventional technology described in PTL 1, the fluidity and thermal stability of the spray composition itself used in formation of the coating layer of the two-color-molded sheet material are not investigated and need to be further improved.

Accordingly, it is an object of the disclosure to provide a spray coating sol having adequate fluidity and excellent thermal stability that can be used in formation of a spray coating layer of an automobile interior material.

In addition, it is an object of the disclosure to provide a vinyl chloride resin molded product having a spray coating layer in which the spray coating layer is formed using the spray coating sol and to provide a laminate including the vinyl chloride resin molded product having a spray coating layer.

### (Solution to Problem)

The present inventor has intensively studied for the purpose of solving the above problems. The present inventor then has found that a spray coating sol having a viscosity within a prescribed range prepared using vinyl chloride resin fine particles, a plasticizer, and a solvent can simultaneously achieve excellent fluidity and thermal stability. The inventor has then verified that the spray coating sol can be satisfactorily used for forming a spray coating layer of an automobile interior material, and the disclosure has been accomplished.

That is, it is an object of this disclosure to advantageously solve the above problems, and the spray coating sol of the disclosure is a spray coating sol for forming a spray coating layer of an automobile interior material and is characterized by containing vinyl chloride-based fine particles (A), a plasticizer (B), and a solvent (C) and by having a viscosity of 500 mPa·s or more and 50000 mPa·s or less. The spray coating sol having a viscosity within a prescribed range thus prepared using prescribed components can show excellent fluidity and thermal stability. As a result, in the case of spray coating of the spray coating sol of the disclosure, a spray coating layer suppressed in, for example, coloring and irregular color and having excellent design quality can be obtained.

In the disclosure, the "viscosity" can be measured with a viscometer under an environment of a temperature of 23°C at a rotation speed of 6 rpm.

Here, the spray coating sol of the disclosure preferably further contains a colorant (D). This is because the spray coating sol of the disclosure further containing a colorant (D) can impart a desired color to the spray coating layer and can further enhance the design quality of a vinyl chloride resin molded product having a spray coating layer including the spray coating layer. As a result, a vinyl chloride resin molded product having a spray coating layer and a laminate including the vinyl chloride resin molded product having a spray coating layer can be used as an automobile interior material constituting an automobile interior part having more excellent design quality.

In addition, in the spray coating sol of the disclosure, the vinyl chloride-based fine particles (A) preferably have an average particle diameter of 30 µm or less. This is because if the average particle diameter of the vinyl chloride-based fine particles (A) is not higher than the above upper limit, it is possible to provide a vinyl chloride resin molded product having a spray coating layer having more excellent design quality.

In the disclosure, the "average particle diameter" can be measured as a volume-average particle diameter by a laser diffraction method in accordance with JIS Z8825.

In addition, in the spray coating sol of the disclosure, the plasticizer (B) preferably contains a trimellitate and/or a pyromellitate. This is because if the plasticizer in the spray coating sol contains at least one of a trimellitate and a pyromellitate, the fluidity and thermal stability of the spray coating sol can be further improved.

In addition, in the spray coating sol of the disclosure, the solvent (C) preferably has a boiling point of 200°C or more at 1 atm. This is because if the boiling point of the solvent in the spray coating sol is not lower than the above lower limit, the design quality of the spray coating layer and an automobile interior material including the spray coating layer can be prevented from being deteriorated by generation of bubbles and so on from the applied sol, for example, when the coating object to which the spray coating sol is applied is heated. In addition, the above is because a vinyl chloride resin molded product having a spray coating layer and so on can be more safely formed.

In addition, it is an object of this disclosure to advantageously solve the above problems, and the vinyl chloride resin molded product having a spray coating layer of the disclosure is characterized by including a vinyl chloride resin molded product prepared by forming a vinyl chloride resin composition and a spray coating layer formed using any of the above-described spray coating sols on the vinyl chloride resin molded product. Thus, in a vinyl chloride resin molded product having a spray coating layer including the above-described spray coating layer and vinyl chloride resin molded product, irregular color and coloring of the spray coating layer present on the surface are suppressed, and a two-color molded product as an automobile interior material having good design quality can be obtained.

Furthermore, it is an object of this disclosure to advantageously solve the above problems, and the laminate of the disclosure is characterized by including a foamed polyurethane molded product and the above-described vinyl chloride resin molded product having a spray coating layer in which the vinyl chloride resin molded product of the vinyl chloride resin molded product having a spray coating layer is formed on the foamed polyurethane molded product. A laminate formed using a foamed polyurethane molded product and the above-described vinyl chloride resin molded product having a spray coating layer can be used as, for example, an automobile interior material constituting an automobile interior part, such as an automobile instrument panel, having excellent design quality.

In addition, it is an object of this disclosure to advantageously solve the above problems, and the method for manufacturing a vinyl chloride resin molded product having a spray coating layer of the disclosure is characterized by including step (a) of forming a spray coating layer using any of the above-described spray coating sols and step (b) of forming a vinyl chloride resin molded product using a vinyl chloride resin composition such that the spray coating layer and the vinyl chloride resin molded product are in contact with each other. When a vinyl chloride resin molded product having a spray coating layer is manufactured through steps (a) and (b), irregular color and coloring of the spray coating layer present on the surface are suppressed, and a two-color molded product as an automobile interior material having good design quality can be obtained.

### (Advantageous Effect)

According to the disclosure, it is possible to provide a spray coating sol having adequate fluidity and excellent thermal stability that can be used in formation of a spray coating layer of an automobile interior material.

In addition, according to the disclosure, it is possible to provide a vinyl chloride resin molded product having a spray coating layer in which the spray coating layer is formed using the spray coating sol and a method for manufacturing the same, and a laminate including the vinyl chloride resin molded product having a spray coating layer.

### DETAILED DESCRIPTION

Embodiments of the disclosure will now be described in detail. The spray coating sol of the disclosure can be used in, for example, forming a vinyl chloride resin molded product having a spray coating layer of the disclosure. In addition, the vinyl chloride resin molded product having a spray coating layer formed using the spray coating sol of the disclosure can be used in, for example, manufacturing of the laminate of the disclosure including the vinyl chloride resin molded product having a spray coating layer.

The vinyl chloride resin molded product having a spray coating layer of the disclosure can be suitably used as, for example, an automobile interior material, such as a surface skin of an automobile interior part, e.g., an automobile instrument panel, having excellent design quality. In addition, the laminate of the disclosure can be suitably used as, for example, an automobile interior material constituting an automobile interior part, such as an automobile instrument panel, having excellent design quality. Furthermore, the spray coating sol of the disclosure can be suitably used in, for example, forming a spray coating layer present on the surface of the surface skin of an automobile interior part such as an automobile instrument panel.

The vinyl chloride resin molded product having a spray coating layer of the disclosure can be obtained according to, for example, the method for manufacturing a vinyl chloride resin molded product having a spray coating layer of the disclosure.

### (Spray coating sol)

The spray coating sol of the disclosure is characterized by containing vinyl chloride-based fine particles (A), a plasticizer (B), and a solvent (C) and by having a viscosity within a prescribed range. The spray coating sol of the disclosure may optionally further contain other components such as a colorant (D) and an additive, in addition to the components (A), (B), and (C). Since the spray coating sol of the disclosure at least contains the prescribed components (A), (B), and (C) and has a viscosity within a prescribed range, excellent fluidity and thermal stability can be simultaneously achieved. Accordingly, the spray coating sol of the disclosure can be precisely sprayed, for example, even in a fine textured pattern applied to a coating object, while dripping during spraying is suppressed, and is unlikely to cause coloring and so on by heating. As a result, the spray coating layer formed using the spray coating sol of the disclosure can express a uniform and precise pattern without being colored by heating and has excellent design quality. Accordingly, the spray coating layer can be used as an automobile interior material constituting an automobile interior part that requires high design quality.

The term "sol" in the disclosure indicates a liquid in a state in which the component is dispersed (partially including dissolution) under an environment of a temperature of 23°C and 1 atm.

### <Vinyl chloride-based fine particles (A)>

### [Composition]

The vinyl chloride-based fine particles (A) used in the spray coating sol of the disclosure are fine particles containing a vinyl chloride resin. The vinyl chloride-based fine particles (A) contain the vinyl chloride resin in an amount of preferably 50 mass% or more, more preferably 90 mass% or more, and further preferably 99 mass% or more.

Here, examples of the vinyl chloride resin constituting the vinyl chloride-based fine particles (A) include a vinyl chloride copolymer containing a vinyl chloride monomer unit in an amount of preferably 50 mass% or more and more preferably 70 mass% or more, in addition to a homopolymer consisting of a vinyl chloride monomer unit. Specific examples of the monomer (comonomer) copolymerizable with a vinyl chloride monomer that can constitute a vinyl chloride copolymer include olefins, such as ethylene and propylene; halogenated olefins, such as allyl chloride, vinylidene chloride, vinyl fluoride, and trifluorochloroethylene; carboxylic acid vinyl esters, such as vinyl acetate and vinyl propionate; vinyl ethers, such as isobutyl vinyl ether and cetyl vinyl ether; allyl ethers, such as allyl-3-chloro-2-oxypropyl ether and allyl glycidyl ether; unsaturated carboxylic acids, such as acrylic acid, maleic acid, itaconic acid, 2-hydroxyethyl acrylate, methyl methacrylate, monomethyl maleate, diethyl maleate, and maleic anhydride, and esters or acid anhydrides thereof; unsaturated nitriles, such as acrylonitrile and methacrylonitrile; acrylamides, such as acrylamide, N-methylol acrylamide, acrylamide-2-methyl propane sulfonic acid, and (meth)acrylamidopropyltrimethylammonium chloride; and allylamines, such as allylamine benzoate and diallyldimethylammonium chloride, and derivatives thereof. The above-mentioned monomers are merely some of comonomers, and as the comonomer, a variety of monomers exemplified in pages 75 to 104 of "Polyvinyl Chloride" edited by the Division of Vinyl of the Kinka Chemical Society, Japan and published by Nikkan Kogyo Shimbun, Ltd. (1988) can be used. These comonomers may be used singly or in combinations of two or more. Furthermore, examples of the vinyl chloride resin (a) also include resins formed by graft polymerization of (1) vinyl chloride or (2) vinyl chloride and a comonomer mentioned above with a resin such as an ethylene-vinyl acetate copolymer, an ethylene-methyl methacrylate copolymer, an ethylene-ethyl acrylate copolymer, and a chlorinated polyethylene.

Here, in the present specification, the term "(meth)acryl" means acryl and/or methacryl.

### [Average particle diameter]

Here, the vinyl chloride-based fine particles (A) preferably have an average particle diameter of 0.1 µm or more and preferably 30 µm or less, more preferably 20 µm or less, and further preferably less than 10 µm. This is because if the average particle diameter of the vinyl chloride-based fine particles (A) is not lower than the above lower limit, extremely small vinyl chloride-based fine particles (A) are prevented from aggregating with each other in preparation of a spray coating sol, and good dispersibility of the spray coating sol can be maintained. In addition, the above is because the vinyl chloride-based fine particles (A) can be more easily handled. In addition, the above is because if the average particle diameter of the vinyl chloride-based fine particles (A) is not higher than the above upper limit, the dispersibility of the spray coating sol is enhanced, and a vinyl chloride resin molded product having a spray coating layer in which the spray coating layer has more excellent design quality can be obtained.

### [Average degree of polymerization]

The vinyl chloride resin constituting the vinyl chloride-based fine particles (A) preferably has an average degree of polymerization of 500 or more, more preferably 600 or more, and preferably 3000 or less, more preferably 2500 or less, and further preferably 2000 or less. This is because if the average degree of polymerization of the vinyl chloride resin constituting the vinyl chloride-based fine particles (A) is not lower than the above lower limit, the thermal stability of the spray coating sol can be further improved. In addition, the above is because if the average degree of polymerization of the vinyl chloride resin constituting the vinyl chloride-based fine particles (A) is not higher than the above upper limit, the heat resistance of the vinyl chloride-based fine particles (A) is improved, and the coloring resistance of the spray coating layer formed using the spray coating sol is increased to further improve the design quality.
In the disclosure, the "average degree of polymerization" can be measured in accordance with JIS K6720-2.

### <Plasticizer (B)>

The spray coating sol of the disclosure needs to further contain a plasticizer (B) in addition to the vinyl chloride-based fine particles (A). If the plasticizer (B) is not used in the preparation of the spray coating sol, the spray coating sol cannot show excellent fluidity to well perform spray coating. As a result, the surface of the two-color molded product, for example, as an automobile interior material constituting an automobile interior part cannot be made into a spray coating layer having excellent design quality.

### [Type]

Here, specific examples of the plasticizer (B) include linear trimellitates in which the alkyl groups constituting the esters are each linear [the trimellitates may be composed of a single compound or may be a mixture], such as trimethyl trimellitate, triethyl trimellitate, tri-n-propyl trimellitate, tri-n-butyl trimellitate, tri-n-pentyl trimellitate, tri-n-hexyl trimellitate, tri-n-heptyl trimellitate, tri-n-octyl trimellitate, tri-n-nonyl trimellitate, tri-n-decyl trimellitate, tri-n-undecyl trimellitate, tri-n-dodecyl trimellitate, tri-n-tridecyl trimellitate, tri-n-tetradecyl trimellitate, tri-n-pentadecyl trimellitate, tri-n-hexadecyl trimellitate, tri-n-heptadecyl trimellitate, tri-n-stearyl trimellitate, and tri-n-alkyl trimellitate (where the numbers of carbon atoms of the alkyl groups of the tri-n-alkyl trimellitate may be different from each other in one molecule);
branched trimellitates in which the alkyl groups constituting the esters are each branched [the trimellitates may be composed of a single compound or may be a mixture], such as tri-i-propyl trimellitate, tri-i-butyl trimellitate, tri-i-pentyl trimellitate, tri-i-hexyl trimellitate, tri-i-heptyl trimellitate, tri-i-octyl trimellitate, tri-(2-ethylhexyl) trimellitate, tri-i-nonyl trimellitate, tri-i-decyl trimellitate, tri-i-undecyl trimellitate, tri-i-dodecyl trimellitate, tri-i-tridecyl trimellitate, tri-i-tetradecyl trimellitate, tri-i-pentadecyl trimellitate, tri-i-hexadecyl trimellitate, tri-i-heptadecyl trimellitate, tri-i-octadecyl trimellitate, and trialkyl trimellitate (where the numbers of carbon atoms of the alkyl groups of the trialkyl trimellitate may be different from each other in one molecule);
linear pyromellitates in which the alkyl groups constituting the esters are each linear [the pyromellitates may be composed of a single compound or may be a mixture], such as tetramethyl pyromellitate, tetraethyl pyromellitate, tetra-n-propyl pyromellitate, tetra-n-butyl pyromellitate, tetra-n-pentyl pyromellitate, tetra-n-hexyl pyromellitate, tetra-n-heptyl pyromellitate, tetra-n-octyl pyromellitate, tetra-n-nonyl pyromellitate, tetra-n-decyl pyromellitate, tetra-n-undecyl pyromellitate, tetra-n-dodecyl pyromellitate, tetra-n-tridecyl pyromellitate, tetra-n-tetradecyl pyromellitate, tetra-n-pentadecyl pyromellitate, tetra-n-hexadecyl pyromellitate, tetra-n-heptadecyl pyromellitate, tetra-n-stearyl pyromellitate, and tetra-n-alkyl pyromellitate (where the numbers of carbon atoms of the alkyl groups of the tetra-n-alkyl pyromellitate may be different from each other in one molecule);
branched pyromellitates in which the alkyl groups constituting the esters are each branched [the pyromellitates may be composed of a single compound or may be a mixture], such as tetra-i-propyl pyromellitate, tetra-i-butyl pyromellitate, tetra-i-pentyl pyromellitate, tetra-i-hexyl pyromellitate, tetra-i-heptyl pyromellitate, tetra-i-octyl pyromellitate, tetra-(2-ethylhexyl) pyromellitate, tetra-i-nonyl pyromellitate, tetra-i-decyl pyromellitate, tetra-i-undecyl pyromellitate, tetra-i-dodecyl pyromellitate, tetra-i-tridecyl pyromellitate, tetra-i-tetradecyl pyromellitate, tetra-i-pentadecyl pyromellitate, tetra-i-hexadecyl pyromellitate, tetra-i-heptadecyl pyromellitate, tetra-i-octadecyl pyromellitate, and tetraalkyl pyromellitate (where the numbers of carbon atoms of the alkyl groups of the tetraalkyl pyromellitate may be different from each other in one molecule);
phthalic acid derivatives, such as dimethyl phthalate, diethyl phthalate, dibutyl phthalate, di-(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, butylbenzyl phthalate, dinonyl phthalate, and dicyclohexyl phthalate;
isophthalic acid derivatives, such as dimethyl isophthalate, di-(2-ethylhexyl) isophthalate, and diisooctyl isophthalate;
tetrahydrophthalic acid derivatives, such as di-(2-ethylhexyl) tetrahydrophthalate, di-n-octyl tetrahydrophthalate, and diisodecyl tetrahydrophthalate;
adipic acid derivatives, such as di-n-butyl adipate, di(2-ethylhexyl) adipate, diisodecyl adipate, and diisononyl adipate;
azelaic acid derivatives, such as di-(2-ethylhexyl) azelate, diisooctyl azelate, and di-n-hexyl azelate;
sebacic acid derivatives, such as di-n-butyl sebacate, di-(2-ethylhexyl) sebacate, diisodecyl sebacate, and di-(2-butyloctyl) sebacate;
maleic acid derivatives, such as di-n-butyl maleate, dimethyl maleate, diethyl maleate, and di-(2-ethylhexyl) maleate;
fumaric acid derivatives, such as di-n-butyl fumarate and di-(2-ethylhexyl) fumarate;
citric acid derivatives, such as triethyl citrate, tri-n-butyl citrate, acetyltriethyl citrate, and acetyl tri-(2-ethylhexyl) citrate;
itaconic acid derivatives, such as monomethyl itaconate, monobutyl itaconate, dimethyl itaconate, diethyl itaconate, dibutyl itaconate, and di-(2-ethylhexyl) itaconate;
oleic acid derivatives, such as butyl oleate, glyceryl monooleate, and diethylene glycol monooleate;
ricinoleic acid derivatives, such as methylacetyl ricinoleate, butylacetyl ricinoleate, glyceryl monoricinoleate, and diethylene glycol monoricinoleate;
stearic acid derivatives, such as n-butyl stearate and diethylene glycol distearate;
other fatty acid derivatives, such as diethylene glycol monolaurate, diethylene glycol dipelargonate, and pentaerythritol-fatty acid ester;
phosphoric acid derivatives, such as triethyl phosphate, tributyl phosphate, tri-(2-ethylhexyl) phosphate, tributoxyethyl phosphate, triphenyl phosphate, cresyl diphenyl phosphate, tricresyl phosphate, trixylenyl phosphate, and tris(chloroethyl) phosphate;
glycol derivatives, such as diethylene glycol dibenzoate, dipropylene glycol dibenzoate, triethylene glycol dibenzoate, triethylene glycol di-(2-ethylbutyrate), triethylene glycol di-(2-ethylhexoate), and dibutyl methylene bisthioglycolate;
glycerol derivatives, such as glycerol monoacetate, glycerol triacetate, and glycerol tributyrate;
epoxy derivatives, such as diisodecyl epoxy hexahydrophthalate, epoxy triglyceride, epoxidized octyl oleate, and epoxidized decyl oleate; and polyester-based plasticizers, such as adipic acid-based polyester, sebacic acid-based polyester, and phthalic acid-based polyester.
These plasticizers may be used singly or in combinations of two or more.

Among the above-mentioned plasticizers, from the viewpoint of improving the fluidity of a spray coating sol and further improving the thermal stability, the plasticizer (B) preferably contains a trimellitate and/or a pyromellitate. When a trimellitate is used in the plasticizer (B), the trimellitate is preferably a linear trimellitate, and more preferably a linear trimellitate having two or more alkyl groups having different numbers of carbon atoms in the molecule is used. Here, the number of carbon atoms of the alkyl group is preferably 8 to 10, and the alkyl group is more preferably an n-octyl group or an n-decyl group. Furthermore, when a pyromellitate is used in the plasticizer (B), the pyromellitate is preferably a branched pyromellitate, more preferably the number of carbon atoms of the alkyl group constituting the ester is 6 to 10, and further preferably the alkyl group is 2-ethylhexyl group.

### [Content]

The content of the plasticizer (B) used in the spray coating sol is preferably 10 parts by mass or more, more preferably 20 parts by mass or more and preferably 150 parts by mass or less, more preferably 100 parts by mass or less, and further preferably 80 parts by mass or less, based on 100 parts by mass of the vinyl chloride-based fine particles (A). This is because if the content of the plasticizer (B) is not lower than the above lower limit, the fluidity as a spray coating sol is high, and the spray coating sol can be more precisely sprayed, for example, even in a fine textured pattern applied to a coating object. As a result, a spray coating layer having higher design quality can be formed using the spray coating sol. In addition, the above is because if the content of the plasticizer (B) is not higher than the above upper limit, the spray coating sol can be imparted with adequate fluidity that can suppress dripping during spray coating, and a spray coating layer having higher design quality can be formed.

### <Solvent (C)>

The spray coating sol of the disclosure needs to further contain a solvent (C) in addition to the vinyl chloride-based fine particles (A) and the plasticizer (B). A spray coating sol having excellent fluidity and thermal stability can be more easily prepared by further using the solvent (C) in the preparation of the spray coating sol.

The solvent (C) is not particularly limited, and examples thereof include known hydrocarbon-based solvents, alcohol-based solvents, ketone-based solvents, ester-based solvents, ether-based solvents, glycol-based solvents, glycol-based ester solvents, and glycol ether-based solvents. Among these solvents, the solvent (C) is preferably a glycol ester-based solvent, such as ethyl diglycol acetate or butyl diglycol acetate, and more preferably butyl diglycol acetate, from the viewpoint of further improving the fluidity and the thermal stability and having a desired boiling point described below.

### [Boiling point]

Here, the solvent (C) preferably has a boiling point at 1 atm of 200°C or more, more preferably 210°C or more, and preferably 300°C or less. This is because if the boiling point of the solvent (C) is not lower than the above lower limit, for example, when a mold is heated in formation of a vinyl chloride resin molded product having a spray coating layer of the disclosure, the design quality of the formed spray coating layer is prevented from being deteriorated due to generation of bubbles from the inside of the spray coating sol previously applied to the mold. In addition, the above is because if the boiling point of the solvent (C) is not higher than the above upper limit, a spray coating layer from which the solvent (C) is well removed can be more easily formed.

### [Content]

The content of the solvent (C) in a spray coating sol is usually higher than 0 parts by mass, preferably 1 part by mass or more, and more preferably 5 parts by mass or more, and preferably 100 parts by mass or less, more preferably 80 parts by mass or less, based on 100 parts by mass of the vinyl chloride-based fine particles (A). This is because if the solvent (C) is used together with the plasticizer (B) at a content of not lower than the above lower limit, the viscosity and fluidity of the spray coating sol are further improved, and the sol can be further precisely sprayed, for example, even in a fine textured pattern applied to a coating object. As a result, a spray coating layer having further higher design quality can be obtained more economically by using the spray coating sol. In addition, the above is because if the solvent (C) is used together with the plasticizer (B) at a content of not lower than the above lower limit, the thermal stability of the spray coating sol is further increased, and occurrence of coloring and so on is further suppressed even when the spray coating sol is exposed to high temperature. In addition, the above is because if the solvent (C) is used together with the plasticizer (B) at a content of not higher than the above upper limit, the spray coating sol can be imparted with adequate fluidity that can suppress dripping during spray coating, and a spray coating layer having further higher design quality can be formed.

In particular, the sum of the content of the plasticizer (B) and the content of the solvent (C) in the spray coating sol is preferably 55 parts by mass or more and more preferably 60 parts by mass or more based on 100 parts by mass of the vinyl chloride-based fine particles (A), from the viewpoint of suppressing solidification of the sol and imparting a better viscosity to the spray coating sol. This is because if the sum of the content of the plasticizer (B) and the content of the solvent (C) is not lower than the above lower limit, a spray coating sol having excellent fluidity and thermal stability can be obtained more economically, while solidification of the spray coating sol is sufficiently suppressed. As a result, a vinyl chloride resin molded product having a spray coating layer in which the spray coating layer has more excellent design quality and a laminate including the vinyl chloride resin molded product having a spray coating layer can be manufactured more economically.

### <Other components>

The spray coating sol of the disclosure can optionally further contain other components, such as a colorant (D) and an additive, in addition to the above-described vinyl chloride-based fine particles (A), plasticizer (B), and solvent (C).

### [Colorant (D)]

The colorant (D) can be used to impart more desirable design quality to the surface of the vinyl chloride resin molded product having a spray coating layer and the surface of the laminate.
Here, specific examples of the colorant (D) include quinacridone-based pigments, perylene-based pigments, condensed polyazo pigments, isoindolinone-based pigments, copper phthalocyanine-based pigments, titanium white-based pigments, and carbon black-based pigments. As the colorant (D), these pigments may be used singly or in combinations of two or more at arbitrary ratios.

The quinacridone-based pigment is obtained by treating a p-phenylene dianthranilic acid with concentrated sulfuric acid and has yellowish red to reddish purple hue. Specific examples of the quinacridone-based pigment include quinacridone red, quinacridone magenta, and quinacridone violet.

The perylene-based pigment is obtained by a condensation reaction of perylene-3,4,9,10-tetracarboxylic acid anhydride and an aromatic primary amine and has red to red purple or brown hue. Specific examples of the perylene-based pigment include perylene red, perylene orange, perylene maroon, perylene vermillion, and perylene Bordeaux.

The condensed polyazo pigment is obtained by condensation of an azo dye in a solvent into a high molecular weight form and has a hue of a yellow or red-based pigment. Specific examples of the condensed polyazo pigment include polyazo red, polyazo yellow, chromophthal orange, chromophthal red, and chromophthal scarlet.

The isoindolinone-based pigment is obtained by a condensation reaction of 4,5,6,7-tetrachloroisoindolinone and an aromatic primary diamine and has greenish yellow to red or brown hue. Specific examples of the isoindolinone-based pigment include isoindolinone yellow.

The copper phthalocyanine-based pigment is a pigment in which copper is coordinated to a phthalocyanine and has yellowish green to brilliant blue hue. Specific examples of the copper phthalocyanine-based pigment include phthalocyanine green and phthalocyanine blue.
The titanium white-based pigment is a white pigment consisting of titanium dioxide, has high covering power, and includes anatase type and rutile type.

The carbon black-based pigment is a black pigment containing carbon as a main component and containing oxygen, hydrogen, and nitrogen. Specific examples of the carbon black include thermal black, acetylene black, channel black, furnace black, lamp black, and bone black.

Although the content of the colorant (D) can be appropriately selected, the total content of the whole colorant (D) can be, for example, 0.1 parts by mass or more and 100 parts by mass or less based on 100 parts by mass of the vinyl chloride-based fine particles (A), from the viewpoint of sufficiently providing a desired color to the surface of the two-color molded product while maintaining good fluidity and thermal stability of the spray coating sol.

### [Additive]

The additive is not particularly limited, and examples thereof include stabilizers, such as perchloric acid-treated hydrotalcite, zeolite, β-diketone, and fatty acid metal salts; and other additives.

### -Perchloric acid-treated hydrotalcite-

The perchloric acid-treated hydrotalcite that can be contained in the spray coating sol can be easily manufactured as perchloric acid-introduced hydrotalcite by, for example, adding hydrotalcite to a dilute aqueous solution of perchloric acid, stirring it, and then performing filtration, dehydration, or drying if necessary to substitute at least some of carbonate anions (CO₃²⁻) in the hydrotalcite with perchlorate anions (ClO₄⁻) (one mole of carbonate anions are substituted with two moles of perchlorate anions). Although the molar ratio of the hydrotalcite and the perchloric acid can be arbitrarily set, in general, 0.1 moles or more and 2 moles or less of perchloric acid is preferably used relative to 1 mole of hydrotalcite.

Here, the substitution rate of carbonate anions in untreated hydrotalcite (unsubstitution, without introduction of perchlorate anions) with perchlorate anions is preferably 50 mol% or more, more preferably 70 mol% or more, and further preferably 85 mol% or more. In addition, the substitution rate of carbonate anions in untreated hydrotalcite (unsubstitution, without introduction of perchlorate anions) with perchlorate anions is preferably 95 mol% or less. This is because when the substitution rate of carbonate anions in untreated hydrotalcite (unsubstitution, without introduction of perchlorate anions) with perchlorate anions is within the above range, a vinyl chloride resin molded product can be more easily manufactured.

The hydrotalcite is a nonstoichiometric compound represented by a general formula: [Mg₁₋ₓAlₓ(OH)₂]^{x+}[(CO₃)_{x/2}·mH₂O]^{x-} and is an inorganic material having a layered crystal structure consisting of a positively charged base layer [Mg₁₋ₓAlₓ(OH)₂]^{x+} and a negatively charged intermediate layer [(CO₃)_{x/2}·mH₂O]^{x-}. Here, in the above general formula, x represents a number in a range greater than 0 and less than or equal to 0.33. Natural hydrotalcite is represented by Mg₆Al₂(OH)₁₆CO₃·4H₂O. As synthesized hydrotalcite, Mg_{4.5}Al₂(OH)₁₃CO₃·3.5H₂O is commercially available. A method for synthesizing synthetic hydrotalcite is described in, for example, Japanese Patent Laid-Open No. 61-174270.

Here, the content of the perchloric acid-treated hydrotalcite is not particularly limited and is preferably 0.5 parts by mass or more, more preferably 1 part by mass or more and preferably 10 parts by mass or less, more preferably 8 parts by mass or less, based on 100 parts by mass of the vinyl chloride-based fine particles (A). This is because if the content of the perchloric acid-treated hydrotalcite is within the above range, a spray coating sol can be more easily manufactured.

### -Zeolite-

The spray coating sol can contain zeolite as a stabilizer. Zeolite is a compound represented by a general formula: M_{x/n}·[(AlO₂)ₓ·(SiO₂)_{y}]·zH₂O (where, M represents a metal ion having a valence n; x + y is the number of tetrahedrons per single grid; and z is the number of moles of water). Examples of the type of M in the general formula include monovalent or divalent metals, such as Na, Li, Ca, Mg, and Zn, and mixtures thereof.

Here, the content of the zeolite is not particularly limited and is preferably 0.1 parts by mass or more and preferably 10 parts by mass or less based on 100 parts by mass of the vinyl chloride-based fine particles (A).

### -β-Diketone-

The β-diketone is used for more effectively suppressing the changes in initial color tones of a spray coating sol and a spray coating layer obtained using the spray coating sol. Specific examples of β-diketone include dibenzoylmethane, stearoylbenzoylmethane, and palmitoylbenzoylmethane. These β-diketones may be used singly or in combinations of two or more.

The content of the β-diketone is not particularly limited and is preferably 0.01 parts by mass or more and preferably 5 parts by mass or less based on 100 parts by mass of the vinyl chloride-based fine particles (A).

### -Fatty acid metal salt-

The fatty acid metal salt that can be contained in the spray coating sol is not particularly limited and may be an arbitrary fatty acid metal salt. In particular, monovalent fatty acid metal salts are preferred, monovalent fatty acid metal salts having 12 to 24 carbon atoms are more preferred, and monovalent fatty acid metal salts having 15 to 21 carbon atoms are further preferred. Specific examples of the fatty acid metal salt include lithium stearate, magnesium stearate, aluminum stearate, calcium stearate, strontium stearate, barium stearate, zinc stearate, calcium laurate, barium laurate, zinc laurate, barium 2-ethylhexanoate, zinc 2-ethylhexanoate, barium ricinoleate, and zinc ricinoleate. The metal constituting the fatty acid metal salt is preferably a metal capable of generating a multivalent cation, more preferably a metal capable of generating a divalent cation, further preferably a metal in the third to the sixth periods of the periodic table and capable of generating a divalent cation, and particularly preferably a metal in the fourth period of the periodic table and capable of generating a divalent cation. The most preferred fatty acid metal salt is zinc stearate.

Here, the content of the fatty acid metal salt is not particularly limited and is preferably 0.01 parts by mass or more, more preferably 0.03 parts by mass or more and preferably 5 parts by mass or less based on 100 parts by mass of the vinyl chloride-based fine particles (A). This is because if the content of the fatty acid metal salt is within the above range, the color difference value of the spray coating layer prepared by using the spray coating sol can be reduced.

### -Other additives-

Other additives that can be contained in the spray coating sol are not particularly limited, and examples thereof include perchloric acid compounds other than perchloric acid-treated hydrotalcite, antioxidants, fungicides, flame retardants, antistatic agents, and light stabilizers.

Specific examples of the perchloric acid compound other than the perchloric acid-treated hydrotalcite include sodium perchlorate and potassium perchlorate.

Specific examples of the antioxidant include phenolic antioxidants, sulfuric antioxidants, and phosphite-based antioxidants, such as a phosphite.

Specific examples of the fungicide include aliphatic ester-based fungicides, hydrocarbon-based fungicides, organic nitrogen-based fungicides, and organic nitrogen sulfur-based fungicides.

Specific examples of the flame retardant include halogen-based flame retardants, such as chlorinated paraffin; phosphorus-based flame retardants, such as phosphate esters; and inorganic hydroxides, such as magnesium hydroxide and aluminum hydroxide.

Specific examples of the antistatic agent include anionic antistatic agents, such as fatty acid salts, higher alcohol sulfates, and sulfonic acid salts; cationic antistatic agents, such as aliphatic amine salts and quaternary ammonium salts; and nonionic antistatic agents, such as polyoxyethylene alkyl ethers and polyoxyethylene alkylphenol ethers.

Specific examples of the light stabilizer include ultraviolet absorbers, such as benzotriazole-based, benzophenone-based, and nickel chelate-based ultraviolet absorbers; and hindered amine light stabilizers.

### <Viscosity>

The spray coating sol of the disclosure needs to have a viscosity of 500 mPa·s or more and 50000 mPa·s or less. The viscosity of the spray coating sol of the disclosure is preferably 1000 mPa·s or more, more preferably 1800 mPa·s or more, and further preferably 2600 mPa·s or more and preferably 30000 mPa·s or less, and more preferably 15000 mPa·s or less. This is because if the viscosity is within the above range, the fluidity of the spray coating sol is further improved. Specifically, if the viscosity of the spray coating sol is not lower than the above lower limit, dripping during spray coating is more favorably suppressed to enhance the spray property, and a two-color molded product, such as a vinyl chloride resin molded product having a spray coating layer in which the spray coating layer is uniform and has higher design quality can be obtained. In addition, the above is because if the viscosity of the spray coating sol is not higher than the above upper limit, the sol can be precisely spray-coated, for example, even in a complex textured pattern applied to a coating object without solidifying, and therefore a two-color molded product, such as a vinyl chloride resin molded product having a spray coating layer in which the spray coating layer is fine and has higher design quality can be obtained.

### <Method for preparation>

The spray coating sol of the disclosure can be prepared without being particularly limited by, for example, mixing and stirring the above-described vinyl chloride-based fine particles (A), plasticizer (B), and solvent (C) and other components to be optionally blended. The stirring conditions can be appropriately controlled, and the stirring can be performed, for example, under an environment of a temperature of 20°C to 80°C at a rotation speed of 10 to 10000 rpm for about 1 minute to 5 hours.

### (Vinyl chloride resin molded product having a spray coating layer)

The vinyl chloride resin molded product having a spray coating layer of the disclosure is characterized by including a spray coating layer obtained by forming using the above-described spray coating sol and a vinyl chloride resin molded product prepared by forming a vinyl chloride resin composition. Since the vinyl chloride resin molded product having a spray coating layer of the disclosure includes a spray coating layer formed using the spray coating sol of the disclosure, it can be suitably used as, for example, an automobile interior material, such as a surface skin of an automobile interior part, e.g., an automobile instrument panel, having excellent design quality.

### <Spray coating layer>

Here, the spray coating layer of the vinyl chloride resin molded product having a spray coating layer of the disclosure is formed by an arbitrary method using the above-described spray coating sol. The spray coating layer usually constitutes part or most of the outermost surface (on the side that can come in contact with the person who gets in a car) of a surface skin of an automobile interior part, such as an automobile instrument panel or a door trim, and imparts an ornamental value to the vinyl chloride resin molded product having a spray coating layer as a two-color molded product. Since the spray coating layer is, for example, formed using the spray coating sol of the disclosure, it is possible to reproduce a fine textured pattern or the like precisely and uniformly while achieving a desired color without causing coloring even when the layer is exposed to high temperature in a later step. As a result, the spray coating layer is suitably used as, for example, the surface layer of a surface skin of an automobile interior part, such as an automobile instrument panel, having excellent design quality.

### <Vinyl chloride resin molded product>

The vinyl chloride resin molded product of the vinyl chloride resin molded product having a spray coating layer of the disclosure is a molded product prepared by forming a vinyl chloride resin composition and may further optionally contain an additive other than the vinyl chloride resin. Here, the vinyl chloride resin molded product constitutes, for example, a portion forming a basic structure of an automobile interior material constituting an automobile interior part, such as an automobile instrument panel surface skin or a door trim surface skin, and constitutes a portion showing basic performances (e.g., strength and flexibility). In addition, usually, in the automobile interior parts, such as an automobile instrument panel surface skin and a door trim surface skin, the vinyl chloride resin molded product is present on the inner side (the side that cannot usually be seen by the person who gets in a car) of the spray coating layer in the place where the spray coating layer is formed, and the vinyl chloride resin molded product is present on the outermost surface (on the side that can come in contact with the person who gets in a car) in the place where the spray coating layer is not formed.

### [Vinyl chloride resin composition]

The vinyl chloride resin composition is a composition containing a vinyl chloride resin and is used for forming a vinyl chloride resin molded product. In addition, the vinyl chloride resin composition may further contain an additive other than the vinyl chloride resin composition. The vinyl chloride resin composition may be in a powder form or in a liquid form, and is preferably in a powder form from the viewpoint of easiness of manufacturing.

The vinyl chloride resin contained in the vinyl chloride resin composition is a main component of the vinyl chloride resin molded product and allows the vinyl chloride resin molded product having a spray coating layer including the vinyl chloride resin molded product to show, for example, strength and flexibility.

Here, as the vinyl chloride resin, usually, vinyl chloride resin particles serving as the substrate constituting a vinyl chloride resin molded product are used. In addition, as a dusting agent for improving the powder fluidity of the vinyl chloride resin particles, it is preferred to further use vinyl chloride resin fine particles having a particle diameter different from that of the above-described vinyl chloride resin particles.

In the present specification, the term "resin particle" refers to a particle having a particle diameter larger than 30 µm, and the term "resin fine particle" refers to a particle having a particle diameter of 30 µm or less.

In the disclosure, the "vinyl chloride resin particle" may be identical to the particle having a particle diameter larger than 30 µm in the above-described "vinyl chloride-based fine particles (A)," and the "vinyl chloride resin fine particle" may be identical to the particle having a particle diameter of 30 µm or less in the above-described "vinyl chloride-based fine particles (A)."

### [[Composition]]

Examples of the vinyl chloride resin contained in the vinyl chloride resin composition include a vinyl chloride homopolymer having the same composition as that of the above-described vinyl chloride-based fine particles (A); a vinyl chloride copolymer; and a vinyl chloride graft copolymer. The content proportion of the vinyl chloride monomer unit in the vinyl chloride copolymer and that two or more vinyl chloride resins can be used together are also the same as above.

### [[Characteristics]]

The vinyl chloride resin preferably has an average degree of polymerization of 800 or more and preferably 2000 or less, more preferably 1500 or less. This is because if the average degree of polymerization of the vinyl chloride resin is not lower than the above lower limit, the physical strength and flexibility of the resulting vinyl chloride resin molded product having a spray coating layer are improved. In addition, if the average degree of polymerization of the vinyl chloride resin is not higher than the above upper limit, the meltability of the vinyl chloride resin is enhanced, and therefore a lower forming temperature can be set even if, for example, the vinyl chloride resin molded product is formed through a heating process of powder slush molding. As a result, heat aging, such as coloring, of the spray coating sol previously applied to a coating object such as a mold is further suppressed, and a spray coating layer and a vinyl chloride resin molded product can be more favorably formed such that the vinyl chloride resin molded product overlaps the spray coating layer. That is, the above is because a vinyl chloride resin molded product having a spray coating layer having excellent design quality can be more easily obtained.

### [[Additive]]

Examples of the additive that can be further contained in the vinyl chloride resin composition include plasticizers, stabilizers, release agents, surface modifiers, dusting agents other than the vinyl chloride resin fine particles, colorants, and other additives. In particular, from the viewpoint of imparting better flexibility to the automobile interior material constituting an automobile interior part, it is preferred to use the vinyl chloride resin together with a plasticizer in formation of the vinyl chloride resin molded product.

The plasticizer is not particularly limited, and various plasticizers mentioned as the plasticizer (B) to be used in the spray coating sol described above; epoxidized vegetable oils, such as epoxidized soybean oil and epoxidized linseed oil; chlorinated paraffin; fatty acid esters of glycol, such as triethylene glycol dicaprylate; and known plasticizers, such as butyl epoxy stearate, phenyl oleate, and methyl dihydroabietate can be used.

These plasticizers may be used singly or in combinations of two or more at arbitrary ratios. Among the above-mentioned plasticizers, a trimellitate and/or a pyromellitate is preferably used, and a trimellitate is more preferably used, from the viewpoint of obtaining good flexibility.

The content of the plasticizer is, for example, 70 parts by mass or more and preferably 140 parts by mass or less, more preferably 110 parts by mass or less, based on 100 parts by mass of the vinyl chloride resin. This is because if the content of the plasticizer is not lower than the above lower limit, it is possible to impart better flexibility to the vinyl chloride resin molded product prepared by forming the vinyl chloride resin composition. In addition, the above is because if the content of the plasticizer is not higher than the above upper limit, the meltability of the vinyl chloride resin composition is further enhanced, and a lower formation temperature can be set in formation of the vinyl chloride resin molded product. As a result, the spray coating sol previously applied to a mold or the like can be further prevented from coloring and so on by heat.

Examples of the release agent include 12-hydroxystearic acid-based lubricants, such as 12-hydroxystearate and 12-hydroxystearic acid oligomer.

Examples of the surface modifier include known silicone oils that can be used together with a resin.

Examples of the dusting agent other than the vinyl chloride resin fine particles include inorganic fine particles, such as calcium carbonate, talc, and aluminum oxide; and organic fine particles, such as polyacrylonitrile resin fine particles, poly(meth)acrylate resin fine particles, polystyrene resin fine particles, polyethylene resin fine particles, polypropylene resin fine particles, polyester resin fine particles, and polyamide resin fine particles.

Examples of the stabilizer and the colorant include those mentioned as the stabilizer and the colorant (D) for the above-described spray coating sol.

Examples of other additives include other additives mentioned for the above-described spray coating sol; impact modifiers; fillers; and foaming agents.

Specific examples of the impact modifier include an acrylonitrile-butadiene-styrene copolymer, a methyl methacrylate-butadiene-styrene copolymer, a chlorinated polyethylene, an ethylene-vinyl acetate copolymer, and a chlorosulfonated polyethylene. In the vinyl chloride resin composition, one or more impact modifiers can be used. The impact modifier is dispersed in the vinyl chloride resin composition as an ununiform phase of elastic fine particles. In the vinyl chloride resin composition, the chain and polar group graft-polymerized to the elastic particle are compatible with the vinyl chloride resin (a) to improve the shock resistance of the vinyl chloride resin molded product prepared using the vinyl chloride resin composition.

Specific examples of the filler include silica, talc, mica, calcium carbonate, and clay.

Specific examples of the foaming agent include organic foaming agents, such as azo compounds, e.g., azodicarbonamide and azobisisobutyronitrile, nitroso compounds, e.g., N,N'-dinitrosopentamethylenetetramine, and sulfonyl hydrazide compounds, e.g., p-toluenesulfonyl hydrazide and p,p-oxybis(benzenesulfonyl hydrazide); and gaseous foaming agents, such as volatile hydrocarbon compounds, e.g., Freon gas, carbon dioxide gas, water, and pentane, and microcapsules containing them.

The content of such an additive is not particularly limited and can be appropriately controlled.

### [[Method for preparation]]

The vinyl chloride resin composition can be prepared by mixing the above-described components. The mixing method is not particularly limited, and examples thereof include a method in which the above-mentioned components are mixed by dry blending in an arbitrary order. Here, in the dry blending, a Henschel mixer is preferably used. In addition, the temperature during the dry blending is not particularly limited and is preferably 50°C or more, more preferably 70°C or more and preferably 200°C or less.

### (Method for manufacturing vinyl chloride resin molded product having a spray coating layer)

The method for manufacturing the vinyl chloride resin molded product having a spray coating layer of the disclosure needs to include a prescribed step (a) and a prescribed step (b). Since the manufacturing method of the disclosure includes steps (a) and (b), the vinyl chloride resin molded product having a spray coating layer obtained according to the manufacturing method of the disclosure can have suppressed irregular color and coloring of the spray coating layer present on the surface and can show good design quality as a two-color molded product serving as an automobile interior material constituting an automobile interior part.

### <Step (a)>

In step (a), a spray coating layer is formed using any of the above-described spray coating sols.

### [Method for forming spray coating layer]

Here, in formation of a spray coating layer, for example, with the above-described spray coating sol, an arbitrary coating object is previously spray-coated. The applied spray coating sol is then cooled in the process of forming a vinyl chloride resin molded product described below to form a spray coating layer together with formation of a vinyl chloride resin molded product. As in the above-described method for forming, the spray coating layer and the vinyl chloride resin molded product can be formed with good close adherence by forming the spray coating sol by cooling, without drying immediately after spray coating, at the same time with the formation of the vinyl chloride resin molded product.

As the coating object, for example, glass or a metal having arbitrary shape and pattern according to need can be used. In particular, when the vinyl chloride resin molded product described below is formed by a powder slush molding method, the mold to be used in the powder slush molding can be directly used as the coating object. Each condition for spray coating of the spray coating sol can be appropriately controlled. For example, in order to form a spray coating layer having a thickness of 1 to 200 µm, the coating speed can be 1 to 60 sec/m².

### [Thickness]

The thickness of the spray coating layer is not particularly limited and can be 10 µm or more from the viewpoint of sufficiently providing appearance decoration to the automobile interior material and can be 200 µm or less from the viewpoint of not inhibiting the basic performances, such as strength and flexibility, as an automobile interior material.

### <Step (b)>

In step (b), a vinyl chloride resin molded product is formed using a vinyl chloride resin composition such that the spray coating layer formed in the above step (a) and the vinyl chloride resin molded product are in contact with each other. After step (b), usually, a vinyl chloride resin molded product having a spray coating layer in which the spray coating layer is positioned on the vinyl chloride molded product in close contact therewith is obtained.

### [Method for forming vinyl chloride resin molded product]

The method for forming a vinyl chloride resin molded product is not particularly limited. The vinyl chloride resin molded product can be obtained through, for example, powder slush molding by heating and cooling the vinyl chloride resin composition obtained above.

Here, the vinyl chloride resin molded product may be formed alone separately from the above-described spray coating layer or may be formed directly on the previously molded spray coating layer. In particular, as described below, it is preferred to form the vinyl chloride resin molded product directly on the previously formed spray coating layer, from the viewpoint of more easily obtaining a vinyl chloride resin molded product having a spray coating layer. More specifically, the vinyl chloride resin molded product is preferably obtained by powder slush molding directly using the mold that is the coating object to which the spray coating sol is applied prior to formation of the vinyl chloride resin molded product. That is, it is preferred to form the vinyl chloride resin molded product by applying a vinyl chloride resin composition in a powder form onto a mold to which a spray coating sol is previously applied such that the applied spray coating sol and the vinyl chloride resin composition come into contact with each other and heating and cooling the mold.

Hereinafter, the case of using a mold for powder slush molding will be described as an example of formation of a spray coating layer unless otherwise specified. In addition, as an example of formation of a vinyl chloride resin molded product and a vinyl chloride resin molded product having a spray coating layer, the case of a powder slush molding method using directly the mold provided with the spray coating layer will be described.

The mold temperature in the powder slush molding is not particularly limited and is preferably 200°C or more and preferably 300°C or less, more preferably 250°C or less. This is because if the heating temperature of the mold is not lower than the above lower limit, the vinyl chloride resin composition is favorably molten, and a vinyl chloride resin molded product having excellent physical strength and flexibility can be easily formed. In addition, the above is because if the heating temperature of the mold is suppressed to be the above upper limit or less, the previously applied spray coating sol is further prevented from coloring and so on by heat, and a vinyl chloride resin molded product having a spray coating layer having more excellent design quality can be obtained.

The powder slush molding of the vinyl chloride resin molded product is not particularly limited and can be performed by, for example, the following method. That is, the above-described vinyl chloride resin composition is powdered onto a mold to which a spray coating sol is previously applied and which is then heated to the above-mentioned temperature range on the surface side where the applied spray coating sol is present, and the mold is left to stand while being heated for 5 to 30 seconds. The surplus vinyl chloride resin composition is shaken off from the mold, and the mold is further left to stand while being heated at an arbitrary temperature for 30 seconds to 3 minutes. After being left to stand while being heated, the mold is cooled to 10°C to 60°C to form a vinyl chloride resin molded product favorably adhering to the spray coating layer.

### <Method for forming vinyl chloride resin molded product having a spray coating layer>

The vinyl chloride resin molded product having a spray coating layer can be directly obtained according to the above-described method for forming a vinyl chloride resin molded product, without particular limitation.

That is, the vinyl chloride resin molded product formed by cooling the mold as described above favorably adheres to the previously formed spray coating layer and therefore can be directly removed from the mold as a vinyl chloride resin molded product having a spray coating layer of the disclosure. The vinyl chloride resin molded product having a spray coating layer removed from the mold can be obtained as, for example, a sheet-like two-color molded product having a surface layer favorably shaped in the desired shape and textured pattern applied to the mold.

### (Laminate)

The laminate of the disclosure is characterized by including a foamed polyurethane molded product and the above-described vinyl chloride resin molded product having a spray coating layer in which the vinyl chloride resin molded product of the vinyl chloride resin molded product having a spray coating layer is formed on the foamed polyurethane molded product. Since the laminate of the disclosure includes the vinyl chloride resin molded product having a spray coating layer in which the spray coating layer formed using the spray coating sol of the disclosure is present on the surface side, the surface has excellent reproducibility of color and pattern to show high design quality. Accordingly, the laminate of the disclosure can be suitably used as, for example, an automobile interior material constituting an automobile interior part, such as an automobile instrument panel or a door trim.

Here, the method for stacking is not particularly limited. For example, the following methods can be used. That is, (1) a method in which a foamed polyurethane molded product and a vinyl chloride resin molded product having a spray coating layer are separately provided, and the foamed polyurethane molded product and the vinyl chloride resin molded product having a spray coating layer are then bonded to each other by thermal fusion or thermal bonding, or with a known adhesive or the like such that the vinyl chloride resin molded product portion is positioned on the foamed polyurethane molded product; and (2) a method in which an isocyanate serving as a raw material of a foamed polyurethane molded product is reacted with, for example, a polyol to perform polymerization on the side of the vinyl chloride resin molded product of a vinyl chloride resin molded product having a spray coating layer, and the polyurethane is foamed by a known method to directly form (be lined with) a foamed polyurethane molded product such that the foamed polyurethane molded product is in contact with the side of the vinyl chloride resin molded product of the vinyl chloride resin molded product having a spray coating layer. In particular, the latter method (2) is suitable from the viewpoints that the process is simple and that even in the case of obtaining laminates in various shapes, the vinyl chloride resin molded product having a spray coating layer and the foamed polyurethane molded product easily firmly adhere to each other.

### EXAMPLES

The disclosure will now be specifically described based on Examples, but the disclosure is not limited to the Examples. In the following description, "%" and "part(s)" representing amounts are based on mass unless otherwise specified.

The average particle diameter of vinyl chloride-based fine particles (A), the average degree of polymerization of a vinyl chloride resin, and the fluidity and thermal stability of a spray coating sol were measured or observed by the following methods.

### <Average particle diameter>

The average particle diameter (volume-average particle diameter (µm)) of vinyl chloride-based fine particles (A) was measured in accordance with JIS Z8825. Specifically, vinyl chloride-based fine particles (A) were dispersed in a water tank, and the diffraction and scattering intensity distribution of light was measured and analyzed with the apparatus shown below, and the particle diameters and particle diameter distribution based on volume were measured to calculate the average particle diameter.
Apparatus: laser diffraction particle size analyzer (manufactured by Shimadzu Corporation, SALD-2300)
System of measurement: laser diffraction and scattering
Range of measurement: 0.017 to 2500 µm
Light source: semiconductor laser (wavelength: 680 nm, output: 3 mW)

### <Average degree of polymerization>

The average degree of polymerization of a vinyl chloride resin was calculated in accordance with JIS K6720-2 by dissolving each of the vinyl chloride resins constituting the vinyl chloride-based fine particles (A), vinyl chloride resin particles, and vinyl chloride resin fine particles in cyclohexane and measuring each viscosity.

### <Fluidity>

The fluidity of a spray coating sol was evaluated by measuring the viscosity. Specifically, the viscosity (µPa·s) of the spray coating sol was measured with a viscometer (manufactured by Toki Sangyo Co., Ltd., product name: "BM II," rotor: No. 4) at a rotation speed of 6 rpm under an atmosphere of a temperature of 23°C. When the viscosity is within the above-mentioned prescribed range, the spray coating sol has good fluidity.

### <Thermal stability>

The thermal stability of a spray coating sol was visually evaluated. Specifically, the spray coating sol was applied to a SUS plate having a thickness of 4 mm so as to have a thickness of 30 µm. Subsequently, the SUS plate to which the spray coating sol was applied was heated under an environment of a temperature of 220°C for 300 seconds. The surface of the coating film of the spray coating sol after heating was visually observed to see whether coloring occurred or not. As less coloring is observed on the surface of the coating film of the spray coating sol after heating, as higher thermal stability the spray coating sol has.

### (Example 1)

### <Preparation of spray coating sol>

The blending components shown in Table 1 were stirred using a disper blade type stirrer under an environment of a temperature of 23°C at a rotation speed of 1000 rpm for 30 minutes to obtain a spray coating sol. The resulting spray coating sol was subjected to measurement and observation of the fluidity and thermal stability according to the above-described methods. The results are shown in Table 1.

### <Formation of vinyl chloride resin molded product having a spray coating layer>

### [Preparation of vinyl chloride resin composition]

Among the blending components shown in Table 2, the components excluding the plasticizers (trimellitate and epoxidized soybean oil) and the vinyl chloride resin fine particles serving as a dusting agent were mixed in a Henschel mixer. At the time when the temperature of the mixture reached 80°C, all the plasticizers were added to the mixture, and the temperature was further increased to dry up the mixture (a state in which the plasticizers are absorbed by the vinyl chloride resin particles of a vinyl chloride resin to make the mixture completely dry). Subsequently, the vinyl chloride resin fine particles serving as the dusting agent were added to the mixture at the time when the dried-up mixture was cooled to a temperature of 100°C or less to prepare a vinyl chloride resin composition.

### [Formation of spray coating layer]

The spray coating sol obtained above was partially applied onto a textured mold for powder slush molding (such that there were an applied portion and a non-applied portion on the mold) so as to give a thickness of 30 µm.

### [Formation of vinyl chloride resin molded product]

Subsequently, the textured mold provided with the spray coating layer as described above was heated to a temperature of 230°C. The vinyl chloride resin composition obtained above was powdered onto the surface of the heated textured mold on the side having the spray coating layer. The mold was left to stand for an arbitrary time of about 5 to 20 seconds after the powdering to melt the vinyl chloride resin composition on the spray coating layer formed on the mold. After melting of the vinyl chloride resin composition, the surplus vinyl chloride resin composition was shaken off. Subsequently, the textured mold onto which the vinyl chloride resin composition was powdered was left to stand in an oven set to a temperature of 200°C, and at the time when 60 seconds have elapsed since being left to stand, cooled with cooling water.

### [Removal from the mold of vinyl chloride resin molded product having a spray coating layer]

At the time when the mold temperature was decreased to 40°C, a vinyl chloride resin molded product having a spray coating layer was removed from the mold as a two-color molded sheet, in which a spray coating layer having a thickness of 30 µm was partially formed on a vinyl chloride resin molded sheet of 200 mm × 150 mm × 1 mm.

It was confirmed that the spray coating layer of the resulting vinyl chloride resin molded product having a spray coating layer was formed uniformly in appearance, had no coloring, and had excellent design quality. In addition, in the resulting vinyl chloride resin molded product having a spray coating layer, it was confirmed in appearance that the vinyl chloride resin molded product and the spray coating layer formed on the vinyl chloride resin molded product well adhered to each other.

### (Examples 2 to 8)

Spray coating sols, vinyl chloride resin compositions, and vinyl chloride resin molded products having a spray coating layer were manufactured as in Example 1 except that the blending components in the preparation of the spray coating sols were changed as shown in Table 1. Measurement and observation were performed by the same methods as in Example 1. The results are shown in Table 1.

### (Example 9)

The type of the plasticizer was changed from the trimellitate to the pyromellitate in the preparation of the spray coating sol. A spray coating sol, a vinyl chloride resin composition, and a vinyl chloride resin molded product having a spray coating layer were then manufactured as in Example 1 except that the blending components were changed as shown in Table 1. Measurement and observation were performed by the same methods as in Example 1. The results are shown in Table 1.

### (Comparative Examples 1 and 2)

In the preparation of the spray coating sols, the blending components were changed as shown in Table 1.

However, the mixtures of the blending components shown in Table 1 were solidified, and it was impossible to manufacture a spray coating sol and a vinyl chloride resin molded product having a spray coating layer. The results are shown in Table 1.

### (Comparative Examples 3 and 4)

The solvent (C) was not used in the preparation of the spray coating sols. Spray coating sols, vinyl chloride resin compositions, and vinyl chloride resin molded products having a spray coating layer were manufactured as in Example 1 except that the blending components were changed as shown in Table 1.
Measurement and observation were performed by the same methods as in Example 1. The results are shown in Table 1.

The dispersibility of the resulting spray coating sols was good except for Comparative Examples 1 and 2, and in every spray coating sol, no aggregates were visually observed.

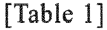

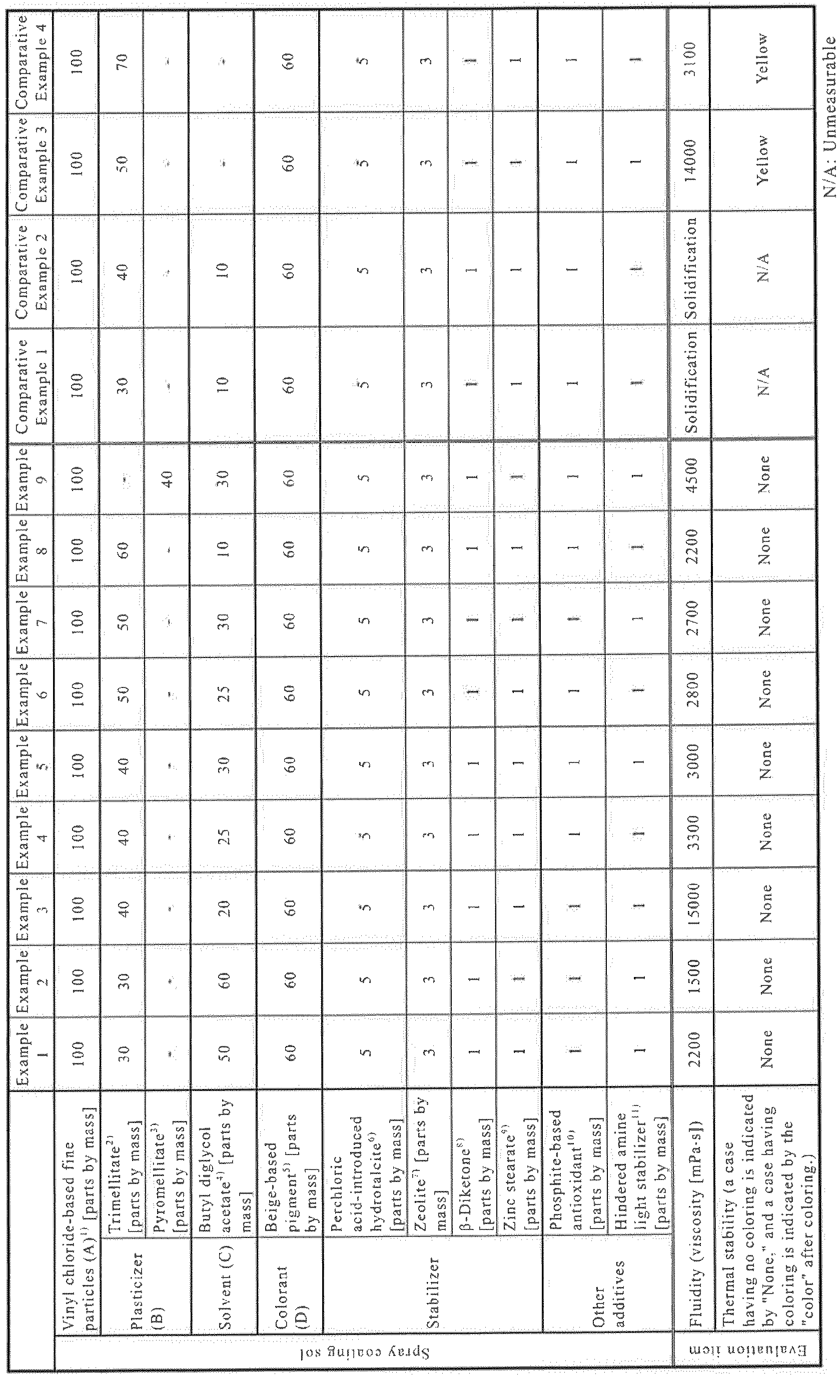

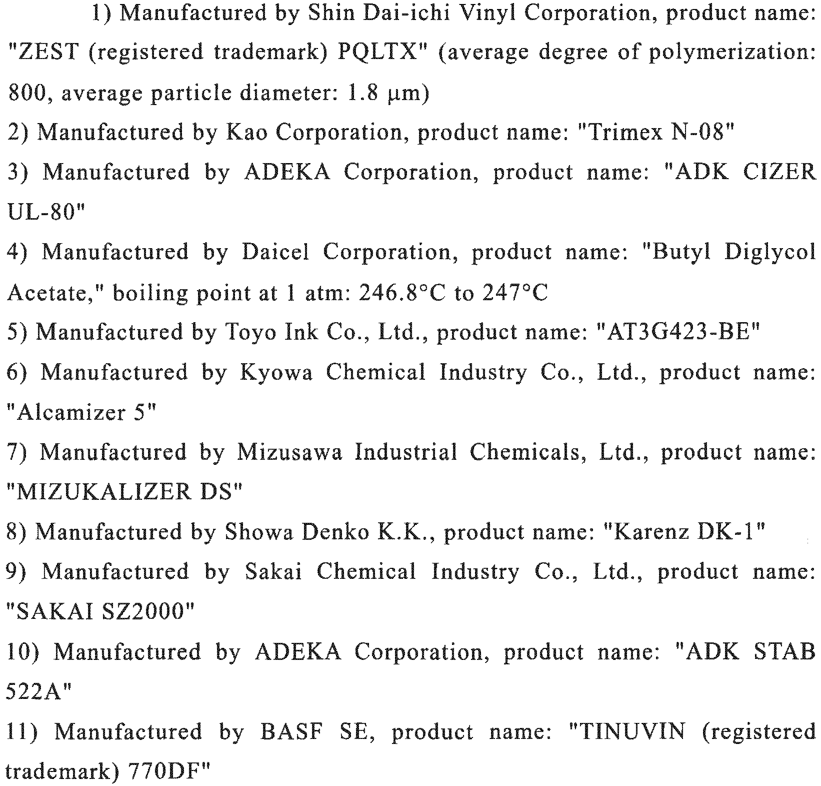

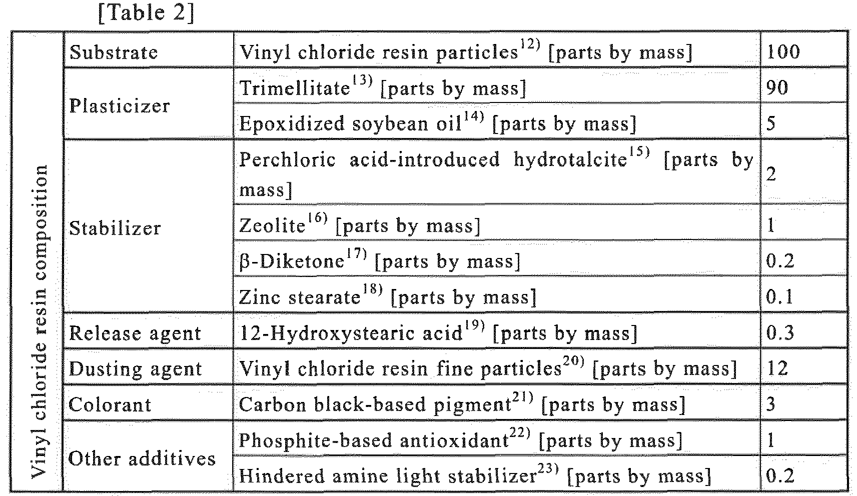

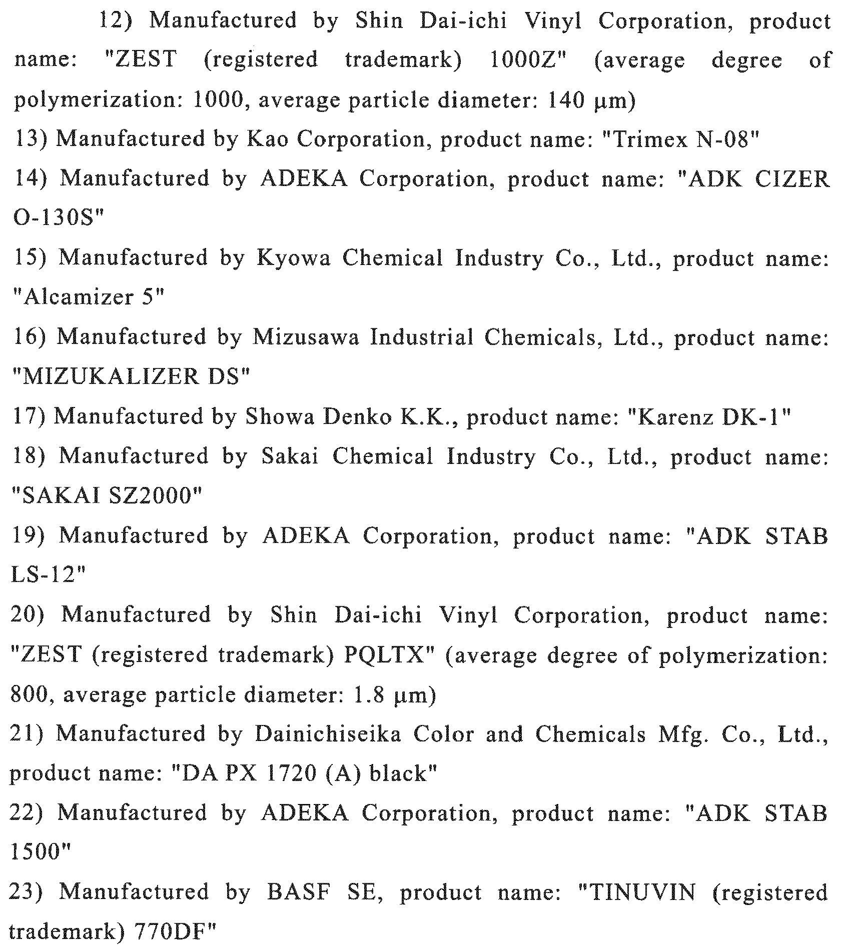

Table 1 demonstrates that the spray coating sols of Examples 1 to 9 each containing vinyl chloride-based fine particles (A), a plasticizer (B), and a solvent (C) and having a prescribed viscosity had adequate fluidity and excellent thermal stability.

In contrast, it was demonstrated that in the spray coating sols of Comparative Examples 3 and 4 in which the solvent (C) was not used, the thermal stability was significantly deteriorated. In addition, in Comparative Examples 1 and 2 not having a prescribed viscosity, no spray coating sol was obtained.

### INDUSTRIAL APPLICABILITY

According to the disclosure, it is possible to provide a spray coating sol having adequate fluidity and excellent thermal stability that can be used in formation of a spray coating layer of an automobile interior material.

In addition, according to the disclosure, it is possible to provide a vinyl chloride resin molded product having a spray coating layer in which the spray coating layer is formed using the spray coating sol, a method for manufacturing the same, and a laminate including the vinyl chloride resin molded product having a spray coating layer.

## Claims

1. A spray coating sol for forming a spray coating layer of an automobile interior material, the spray coating sol
comprising vinyl chloride-based fine particles (A), a plasticizer (B), and a solvent (C); and
having a viscosity of 500 mPa·s or more and 50000 mPa·s or less.

2. The spray coating sol according to claim 1, further comprising a colorant (D).

3. The spray coating sol according to claim 1 or 2, wherein the vinyl chloride-based fine particles (A) have an average particle diameter of 30 µm or less.

4. The spray coating sol according to any one of claims 1 to 3, wherein the plasticizer (B) comprises a trimellitate and/or a pyromellitate.

5. The spray coating sol according to any one of claims 1 to 4, wherein the solvent (C) has a boiling point of 200°C or more.

6. A vinyl chloride resin molded product having a spray coating layer, comprising:
a vinyl chloride resin molded product prepared by forming a vinyl chloride resin composition; and
a spray coating layer formed using a spray coating sol according to any one of claims 1 to 5 on the vinyl chloride resin molded product.

7. A laminate comprising:
a foamed polyurethane molded product; and
a vinyl chloride resin molded product having a spray coating layer according to claim 6, wherein
the vinyl chloride resin molded product of the vinyl chloride resin molded product having a spray coating layer is formed on the foamed polyurethane molded product.

8. A method for manufacturing a vinyl chloride resin molded product having a spray coating layer, the method comprising:
step (a) of forming a spray coating layer using a spray coating sol according to any one of claims 1 to 5; and
step (b) of forming a vinyl chloride resin molded product using a vinyl chloride resin composition such that the spray coating layer and the vinyl chloride resin molded product are in contact with each other.
